# EUROPÄISCHE PATENTSCHRIFT

(11) **EP 3 007 959 B1**
(45) Veröffentlichungstag und Bekanntmachung des Hinweises auf die Patenterteilung: **09.08.2017**
(21) Anmeldenummer: 14725689.5
(22) Anmeldetag: 21.05.2014
(51) Int. Cl.: B62D 21/15, B62D 25/08, B62D 29/04

(54) **INTEGRALER LÄNGSTRÄGER FÜR KRAFTFAHRZEUGE**
INTEGRAL LONGITUDINAL MEMBER FOR MOTOR VEHICLES
LONGERON D'UN SEUL TENANT POUR VÉHICULES À MOTEUR

(30) Priorität: 12.06.2013 DE 102013106073
(43) Veröffentlichungstag der Anmeldung: 20.04.2016
(73) Patentinhaber: ThyssenKrupp Steel Europe AG, 47166 Duisburg (DE)
(72) Erfinder: PATBERG, Lothar, 47445 Moers (DE); MAYER, Stefan, 58239 Schwerte (DE); KRAHNERT, Torsten, 14554 Seddin (DE); HUFENBACH, Werner, 01324 Dresden (DE); LADUSCH, Enrico, 01187 Dresden (DE); WERNER, Jens, 01640 Coswig (DE); KIEßLING, André, 01307 Dresden (DE); HERBIG, Alexander, 01324 Dresden (DE); KIELE, Jörn, 01099 Dresden (DE); LEPPER, Martin, 01279 Dresden (DE)
(74) Vertreter: thyssenkrupp Intellectual Property GmbH
(86) Internationale Anmeldenummer: PCT/EP2014/060407
(87) Internationale Veröffentlichungsnummer: WO 2014/198506

(56) Entgegenhaltungen:
- DE-A1- 10 329 461
- JP-A- H04 151 381
- JP-A- 2005 271 872
- JP-A- 2009 001 238

## Beschreibung

Die Erfindung betrifft einen Längsträger für ein Kraftfahrzeug, insbesondere Elektrofahrzeug, mit einem Energieabsorptionselement zur Absorption von Aufprallenergie und einem Tragelement zur Abstützung von Fahrwerks- und/oder Antriebskomponenten, wobei das Tragelement eine Fügezone zur Anbindung an mindestens ein benachbartes Karosserieteil aufweist, und wobei das Energieabsorptionselement und das Tragelement aus faserverstärktem Kunststoff hergestellt sind.

Aktuell werden Fahrzeugfrontkonstruktionen vorwiegend in der Art ausgeführt, dass diese hinsichtlich der Tragfunktion sowie der Aufprallenergieabsorption im Wesentlichen aus metallischen Bauteilen bestehen. Nachteilig bei diesen Konstruktionen sind insbesondere das relativ hohe Gewicht und die aufwendige Fertigung, d.h. der Zuschnitt, das Umformen und Fügen, sowie die eingeschränkte Variabilität der Wandstärken in Bezug auf die Anforderungen hinsichtlich Steifigkeit und Crashverhalten. Darüber hinaus stellt sich nach einem Auffahrunfall die Reparatur sehr aufwendig dar, da bei entsprechenden Crashlasten gegebenenfalls ein Austausch der kompletten Vorderwagenkonstruktion, infolge der Energieabsorption durch Deformation auch bauteilübergreifend, notwendig sein kann.

In der JP 2005-271872 A ist ein Längsträger für ein Kraftfahrzeug beschrieben, der aus einem Tragelement und einem rohrförmigen Energieabsorptionselement aufgebaut ist, wobei beide Elemente aus faserverstärktem Kunststoff hergestellt sind. Das Tragelement weist einen als geschlossenes Hohlprofil ausgebildeten Längenabschnitt sowie einen im Wesentlichen U-förmig ausgebildeten Längenabschnitt auf und enthält einen Stützkern aus Schaumstoff. In dem Stützkern ist im Bereich des geschlossenen Hohlprofils eine Hohlkammer ausgebildet, die sich an die von dem rohrförmigen Energieabsorptionselement definierte Hohlkammer anschließt und dazu dient, bei hoher Crashlast einen infolge der Deformation nach innen gestülpten Teil des Energieabsorptionselements aufzunehmen. Zudem sind in dem Tragelement Metallteile eingebettet, um daran andere Karosseriestrukturteile anzubinden. Das Tragelement und das Energieabsorptionselement sind miteinander verklebt.

Bei dem aus der JP 2005-271872 A bekannten Längsträger ist insbesondere unbefriedigend, dass dessen Reparatur nach einem Auffahrunfall mit hoher Crashlast aufgrund der stoffschlüssigen Verklebung von Tragelement und Energieabsorptionselement kaum möglich oder jedenfalls sehr aufwendig ist.

Der vorliegenden Erfindung liegt die Aufgabe zugrunde, einen Längsträger der eingangs genannten Art zu schaffen, der sowohl Crashlasten als auch Betriebslasten, insbesondere Fahrwerkslasten aufnimmt, eines geringes Gewicht besitzt, zu einer verbesserten Struktursteifigkeit der Fahrzeugfront- bzw. -heckkonstruktion beiträgt und vergleichsweise reparaturfreundlich ist.

Gelöst wird diese Aufgabe erfindungsgemäß durch einen Längsträger mit den Merkmalen des Anspruchs 1. Bevorzugte und vorteilhafte Ausgestaltungen des erfindungsgemäßen Längsträgers sind in den auf Anspruch 1 rückbezogenen Unteransprüchen angegeben.

Der erfindungsgemäße Längsträger ist dadurch gekennzeichnet, dass das Tragelement Längenabschnitte unterschiedlicher Faserorientierung aufweist, wobei einer der Längenabschnitte im Wesentlichen parallel zu einer horizontalen Längsebene des Längsträgers verlaufende Verstärkungsfasern enthält, während ein weiterer Längenabschnitt des Tragelements, der sich zwischen dem Energieabsorptionselement und dem erstgenannten Längenabschnitt befindet, sich kreuzende, schräg zur Längsachse des Längsträgers verlaufende Verstärkungsfasern enthält, und dass das Energieabsorptionselement und das Tragelement lösbar miteinander verbindbar sind.

Durch die Längenabschnitte unterschiedlicher Faserorientierung wird zum einen die Biegesteifigkeit und zum anderen die Torsionssteifigkeit des Tragelement bzw. Längsträgers erhöht, wobei die im Wesentlichen parallel zu einer horizontalen Längsebene des Längsträgers verlaufenden Verstärkungsfasern neben der Verbesserung der Biegesteifigkeit insbesondere auch der Aufnahme von Crashlasten (Aufpralllasten) dienen. Zugleich trägt das Tragelement des erfindungsgemäßen Längsträgers durch seine Längenabschnitte unterschiedlicher Faserorientierung erheblich zu einer verbesserten Struktursteifigkeit der Fahrzeugfront- bzw. -heckkonstruktion bei. Ferner erfüllt der erfindungsgemäße Längsträger als aus faserverstärktem Kunststoff hergestelltes Leichtbauteil die Forderung nach einem geringen Bauteilgewicht. Zudem ist der erfindungsgemäße Längsträger aufgrund der lösbaren Verbindung von Energieabsorptionselement und Tragelement reparaturfreundlich. Denn das Energieabsorptionselement lässt sich somit nach einem Auffahrunfall, bei dem es relativ geringen Crashlasten ausgesetzt war, gegen ein neues Energieabsorptionselement austauschen.

Eine vorteilhafte Ausgestaltung des erfindungsgemäßen Längsträgers sieht vor, dass das Tragelement einen Befestigungsflansch oder Befestigungsbereich zur lösbaren Anbindung des Energieabsorptionselements aufweist. Der Befestigungsflansch bzw. Befestigungsbereich gestattet eine zuverlässige Verbindung von Tragelement und Energieabsorptionselement, wobei zugleich eine im Wesentlichen gleichmäßige Kraftübertragung vom Energieabsorptionselement auf das Tragelement sichergestellt wird. Darüber hinaus wird durch den Befestigungsflansch bzw. Befestigungsbereich die Torsionssteifigkeit des Tragelements bzw. des Längsträgers verbessert.

Eine weitere vorteilhafte Ausgestaltung des erfindungsgemäßen Längsträgers ist dadurch gekennzeichnet, dass das Energieabsorptionselement ein muffenartiges Ende mit einem Absatz aufweist, in welches das Tragelement eingesteckt oder einsteckbar ist. Diese Ausgestaltung erleichtert die Montage des Energieabsorptionselements und trägt zu einer besonders zuverlässigen Verbindung von Tragelement und Energieabsorptionselement bei.

Nach einer weiteren vorteilhaften Ausgestaltung des erfindungsgemäßen Längsträgers weist dessen Energieabsorptionselement eine integrierte Schaumstruktur auf. Hierdurch lässt sich das Crashlastaufnahmevermögen des erfindungsgemäßen Längsträgers weiter verbessern.

Eine weitere vorteilhafte Ausgestaltung des erfindungsgemäßen Längsträgers sieht vor, dass das Energieabsorptionselement Längenabschnitte unterschiedlicher Wandstärke aufweist. Vorzugsweise nimmt dabei die Wandstärke des Energieabsorptionselements ausgehend vom Tragelement in Richtung des dem Tragelement abgewandten Endes des Energieabsorptionselements kontinuierlich oder stufenweise ab. Hierdurch lässt sich das Crashverhalten des erfindungsgemäßen Längsträgers optimieren.

Des Weiteren lässt sich das Crashverhalten des erfindungsgemäßen Längsträgers auch dadurch optimieren, wenn gemäß einer weiteren bevorzugten Ausgestaltung das Energieabsorptionselement Längenabschnitte unterschiedlicher Querschnittsform aufweist, wobei es in Richtung des Tragelements von einem runden Querschnittsprofil in ein im Wesentlichen rechteckiges Querschnittsprofil übergeht.

Zur Erzielung eines geringen Bauteilgewichts sieht eine weitere bevorzugte Ausgestaltung des erfindungsgemäßen Längsträgers vor, dass dessen Tragelement als durchgängiger Hohlkörper ausgebildet ist. Das Tragelement ist dabei zumindest über einen Längenabschnitt als geschlossenes Hohlprofil ausgebildet, wobei der Profilquerschnitt über die Längsachse des Tragelements hin vorzugsweise variabel, d.h. unterschiedlich ausgebildet ist.

Um Betriebslasten, wie z.B. Fahrwerkslasten, großflächig in das Tragelement einzuleiten und durch die großflächige Lasteinleitung insbesondere die Wandstärke und damit das Gewicht des Längsträgers bzw. des Fahrzeuges insgesamt weiter reduzieren zu können, wird nach einer weiteren bevorzugten Ausgestaltung der Erfindung das Tragelement mit einer Konsole zur Anbindung einer Fahrwerks- oder Antriebskomponente versehen.

Auch ist es für die Leichtbauweise des erfindungsgemäßen Längsträgers günstig, wenn nach einer weiteren bevorzugten Ausgestaltung das Tragelement innenseitig angeordnete Verstärkungsrippen aufweist.

Eine weitere vorteilhafte Ausgestaltung des erfindungsgemäßen Längsträgers ist dadurch gekennzeichnet, dass die Fügezone zur Anbindung des Tragelements an mindestens ein benachbartes Karosserieteil U-förmig ausgebildet ist. Hierdurch lassen sich insbesondere die Struktursteifigkeit eines Vorderwagenbereichs sowie die Aufnahme von Crashlasten, insbesondere deren Verteilung auf benachbarte Karosserieteile, wie z.B. die den Fahrgastraum vom Motorraum trennende Stirnwand (Spritzwand), optimieren. In diesem Zusammenhang sieht eine weitere bevorzugte Ausgestaltung der Erfindung vor, dass die U-förmige Fügezone eine lichte Weite besitzt, die mindestens das 2-fache, vorzugsweise mindestens das 2,5-fache der Querschnittsbreite des Tragelements an dessen Übergang zum Energieabsorptionselement beträgt. Der erfindungsgemäße Längsträger kann in diesem Fall im Vorderwagen einen Teil der Stirnwand, insbesondere einen Teil der Fußraumwand definieren, wobei durch diese Zusatzfunktion eine weitere Reduzierung des Fahrzeuggewichts erzielt werden kann.

Nach einer weiteren vorteilhaften Ausgestaltung des erfindungsgemäßen Längsträgers weisen das Tragelement und/oder das Energieabsorptionselement mindestens eine gerade Markerlinie auf. Diese kann zum Einmessen (Ausrichten) des Längsträgers bzw. seiner Elemente verwendet werden und dient somit der Qualitätssicherung bzw. Funktionsoptimierung.

Nachfolgend wird die Erfindung anhand einer mehrere Ausführungsbeispiele darstellenden Zeichnung näher erläutert. Es zeigen schematisch:
- Fig. 1: einen erfindungsgemäßen Längsträger in einer perspektivischen Ansicht;
- Fig. 2: der Längsträger der Fig. 2, wobei das Energieabsorptionselement von dem Tragelement abgelöst dargestellt ist;
- Fig. 3: das Tragelement des Längsträgers der Fig. 2 mit einer daran angebrachten Konsole zur Anbindung einer Fahrwerks- oder Antriebskomponente; und
- Figuren 4 und 5: weitere Ausführungsbeilspiele des Tragelements des erfindungsgemäßen Längsträgers, jeweils in einer perspektivischen Ansicht.

Der in der Zeichnung dargestellte Längsträger 1 ist insbesondere für den Einbau in eine Fahrzeugfrontkonstruktion bestimmt. Er ist aus einem Tragelement 1.1 zur Abstützung mindestens einer Fahrwerks- oder Antriebskomponente (nicht gezeigt) und einem Energieabsorptionselement 1.2 zur Absorption von Aufprallenergie (Crashlasten) aufgebaut, wobei das Tragelement 1.1 eine Fügezone 1.3 zur Anbindung des Längsträgers 1 an mindestens ein benachbartes Karosserieteil wie beispielsweise eine Fahrzeugbodenplatte, eine Spritzwand und/oder eine A-Säule aufweist.

Das Tragelement 1.1 sowie das Energieabsorptionselement 1.2 sind jeweils aus faserverstärktem Kunststoff hergestellt. Der faserverstärkte Kunststoff enthält ein Verstärkungstextil, das vorzugsweise aus einem Gewebe und/oder Geflecht aus Glas- oder Kohlenstofffasern gebildet und in ein Matrixmaterial aus thermoplastischem oder duroplastischem Kunststoff eingebettet ist. In der Wand des Tragelements 1.1 oder Energieabsorptionselements 1.2 können ein oder mehrere Lagen des Verstärkungstextils eingebettet sein. Die Wandstärke des Tragelements 1.1 oder Energieabsorptionselements 1.2 liegt beispielsweise im Bereich von ca. 2 bis 6 mm.

Das Energieabsorptionselement 1.2 ist lösbar mit dem Tragelement 1.1 verbunden. Das Tragelement 1.1 ist als durchgängiger Hohlkörper ausgebildet. Es weist Längenabschnitte unterschiedlicher Querschnittsform auf. Der mit dem Energieabsorptionselement 1.2 verbundene Längenabschnitt 1.11 weist eine geschlossene, im Wesentlichen rechteckige Querschnittsform (Profilform) auf und geht in einen breiten- sowie höhenerweiterten Längenabschnitt 1.12 über, der an seiner Oberseite eine Einbuchtung (nischenförmige Öffnung) 1.13 aufweist und somit insbesondere im Bereich der Fügezone 1.3 U-förmig ausgebildet ist. An der Einbuchtung 1.13 ist ein nach oben vorstehender Kragen 1.14 integral angeformt. Der Kragen 1.14 ist vorzugsweise durchgängig ausgebildet und erstreckt sich von dem einen Schenkelende 1.31 der U-förmigen Fügezone 1.3 bis zu deren anderen Schenkelende 1.32. Des Weiteren kann an der Außenseite des Tragelements 1.1, insbesondere angrenzend an die Fügezone 1.3, eine Anbindungs- oder Verstärkungsrippe 1.15 integral angeformt sein.

Das Tragelement 1.1 weist an seiner dem Energieabsorptionselement 1.2 zugewandten Stirnseite einen Befestigungsbereich 1.18 auf. An dem Energieabsorptionselement 1.2 ist ein muffenartiges Ende 1.21 ausgebildet, in welches das Tragelement 1.1 eingesteckt bzw. einsteckbar ist. Das muffenartige Ende 1.21 weist dabei innen einen Absatz (Anschlag) auf, der die Einstecktiefe des Tragelements 1.1 begrenzt. Die vorzugsweise lösbare Verbindung erfolgt im Überlappungsbereich des muffenartigen Endes 1.21 und des Befestigungsbereichs 1.18.

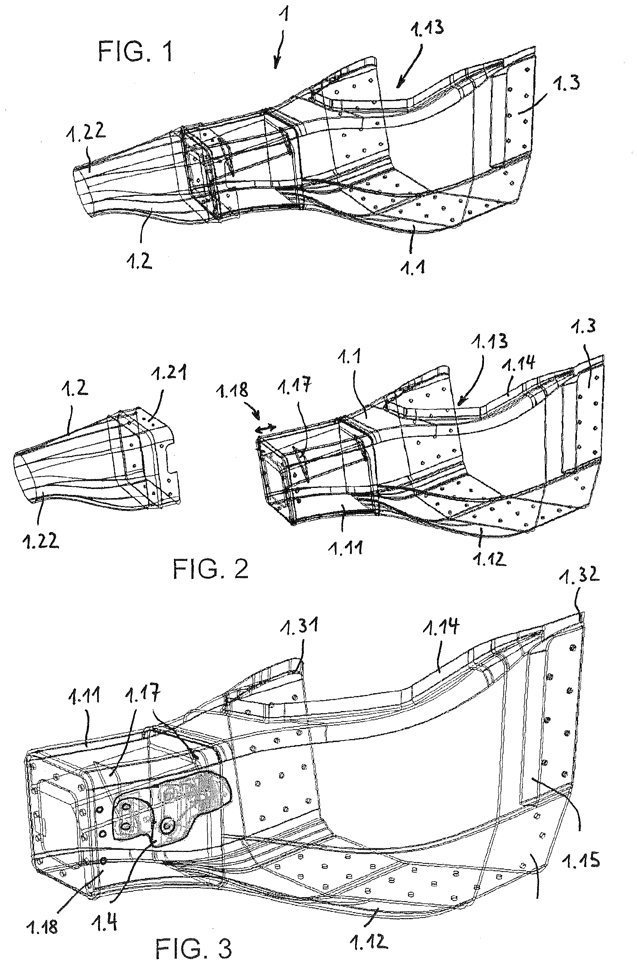

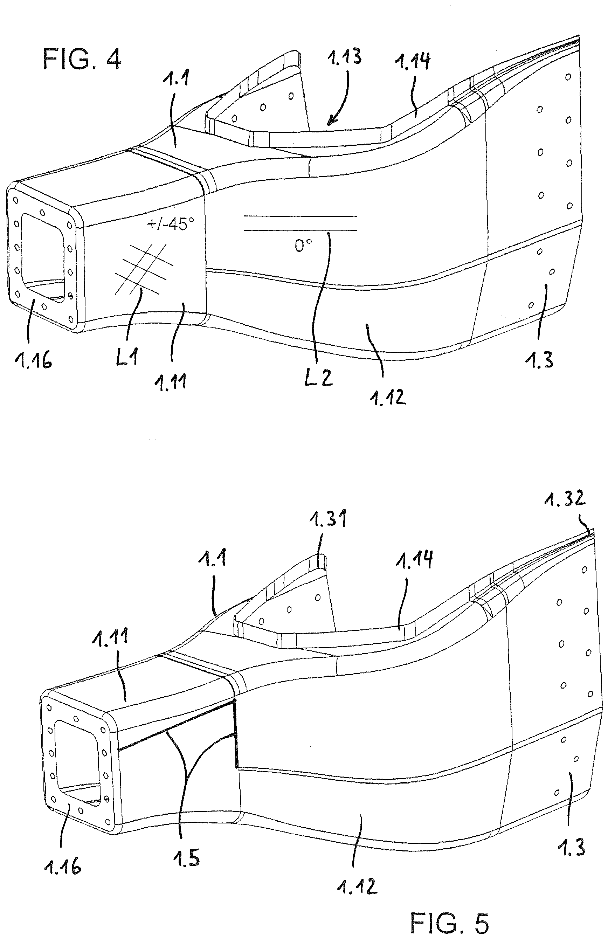

Alternativ kann auch bei einer anderen Ausgestaltung des Energieabsorptionselements (hier in den Figuren 1 bis 3 nicht dargestellt) die Anbindung an das Tragelement 1 über einen Befestigungsflansch 1.16 erfolgen, der radial nach innen gerichtet ist (vgl. Figuren 4 und 5).

Die Fügezonen 1.18 und/oder 1.3 bzw. 1.16 und/oder 1.3 des erfindungsgemäßen Längsträgers 1 sind so ausgebildet, dass dieser sowohl lösbar als auch unlösbar gefügt werden kann. Um einen Austausch des Energieabsorptionselements 1.2 im Reparaturfall zu ermöglichen bzw. zu erleichtern, werden das Energieabsorptionselement 1.2 und das Tragelement 1.1 vorzugsweise lösbar miteinander verbunden.

Des Weiteren können vorzugsweise seitlich an dem Tragelement 1.1 eine oder mehrere Konsolen 1.4, Befestigungswinkel oder dergleichen angebracht, insbesondere integral angeformt oder lösbar montiert sein, an denen Fahrwerkskomponenten (nicht gezeigt), z.B. ein Querlenker, montiert werden können.

Das Energieabsorptionselement 1.2 ist im Wesentlichen rohrförmig ausgebildet. Es besitzt vorzugsweise eine geschlossene Querschnittsform. Die Querschnittsform ändert sich allerdings über die Länge des Energieabsorptionselements 1.2. Der Verbindungsabschnitt mit dem muffenartigen Ende 1.21 besitzt entsprechend dem sich anschließenden Längenabschnitt 1.11 des Tragelements 1.1 ein im Wesentlichen rechteckiges Querschnittsprofil. In Richtung seines dem Tragelement 1.1 abgewandten Endes geht das Energieabsorptionselement 1.2 in ein rundes Querschnittsprofil 1.22 über. Der Außendurchmesser des runden Querschnittsprofils 1.22 ist an dem mit einer Stoßstange (nicht gezeigt) oder dergleichen zu verbindenden Ende deutlich kleiner als die Breite bzw. Höhe des rechteckigen Querschnittsprofils am gegenüberliegenden, mit dem Tragelement verbunden bzw. verbindbaren Ende 1.21.

Erfindungsgemäß weist das Tragelement 1.1 Längenabschnitte 1.11, 1.12 unterschiedlicher Faserorientierung auf, wobei einer (1.12) der Längenabschnitte im Wesentlichen parallel zu einer horizontalen Längsebene des Längsträgers 1 bzw. parallel zur Fahrzeuglängsachse verlaufende Verstärkungsfasern enthält, während ein weiterer Längenabschnitt (1.11) des Tragelements 1.1, der sich zwischen dem Energieabsorptionselement 1.2 und dem erstgenannten Längenabschnitt 1.12 befindet, sich kreuzende, schräg zur Längsachse des Längsträgers 1 verlaufende Verstärkungsfasern enthält. Dies ist in Fig. 4 schematisch durch sich kreuzende Linien L1 und durch parallel zueinander verlaufende Linien L2 angedeutet. Die sich kreuzenden Linien L1 entsprechen Verstärkungsfasern aus Glas- oder vorzugsweise Kohlenstofffasern, die beispielsweise im Wesentlichen in einem Winkel von ca. +/-45° schräg zur Längsachse des Längsträgers 1 verlaufen. Eine solche Faserorientierung kann beispielsweise durch Flechtung von aus Verstärkungsfasern hergestellten Verstärkungsfäden erzeugt werden. Die im Wesentlichen parallel zu einer horizontalen Längsebene des Längsträgers 1 bzw. parallel zur Fahrzeuglängsachse verlaufenden Verstärkungsfasern können beispielsweise durch eine entsprechende Legung von aus Verstärkungsfasern hergestellten Verstärkungsfäden (L2) erzeugt werden.

Die sich kreuzenden, beispielsweise in einem Winkel von ca. +/-45° schräg zur Längsachse des Längsträgers 1 verlaufenden Verstärkungsfasern (L1) erhöhen die Torsionssteifigkeit des Längsträgers 1. Die Verstärkungsfasern (Faserlagen L2), die im Wesentlichen parallel zu einer horizontalen Längsebene des Längsträgers 1 bzw. parallel zur Fahrzeuglängsachse verlaufen, dienen der Aufnahme von Crashlasten und erhöhen die Biegesteifigkeit des Längsträgers 1.

Zur weiteren Erhöhung der Steifigkeit des Längsträgers 1, insbesondere seiner Torsionssteifigkeit, kann das Tragelement 1.1 zudem mit Verstärkungsrippen 1.17 versehen sein. Vorzugsweise sind die Verstärkungsrippen 1.17 auf der Innenseite des Tragelements 1.1 ausgebildet, und zwar in dem das geschlossene, rechteckige Querschnittsprofil aufweisenden Längenabschnitt 1.11 (vgl. Fig. 2 und 3).

Bei dem in Fig. 5 dargestellten Ausführungsbeispiel weist das Tragelement 1.1 außenseitig zwei gerade Markerlinien 1.5 auf, die zusammen einen Winkel, vorzugsweise einen Winkel von 90° einschließen. Diese Marker 1.5 können zum Einmessen (Ausrichten) des Längsträgers 1 bzw. seiner Elemente 1.1, 1.2 verwendet werden. Sie dienen somit der Qualitätssicherung bzw. Funktionsoptimierung.

Die Ausführung des erfindungsgemäßen Längsträgers 1 ist nicht auf die in der Zeichnung dargestellten Ausführungsbeispiele beschränkt. Vielmehr sind zahlreiche Varianten denkbar, die auch bei einer von der Zeichnung abweichenden Gestaltung von der in den beiliegenden Ansprüchen angegebenen Erfindung Gebrauch machen.

So kann beispielsweise das Energieabsorptionselement 1.2 eine integrierte Schaumstruktur enthalten und/oder Längenabschnitte unterschiedlicher Wandstärke aufweisen. Darüber hinaus kann ein erfindungsgemäßer Längsträger 1 auch der Trennung von Nass- und Trockenbereich des betreffenden Fahrzeuges dienen. Insbesondere kann der erfindungsgemäße Längsträger 1 dabei einen Fußraum in der Fahrzeugfrontkonstruktion begrenzen.

## Patentansprüche

1. Längsträger (1) für ein Kraftfahrzeug, mit einem Energieabsorptionselement (1.2) zur Absorption von Aufprallenergie und einem Tragelement (1.1) zur Abstützung von Fahrwerks- und/oder Antriebskomponenten, wobei das Tragelement (1.1) eine Fügezone (1.3) zur Anbindung an mindestens ein benachbartes Karosserieteil aufweist, und wobei das Energieabsorptionselement (1.2) und das Tragelement (1.1) aus faserverstärktem Kunststoff hergestellt sind, **dadurch gekennzeichnet, dass** das Tragelement (1.1) Längenabschnitte (1.11, 1.12) unterschiedlicher Faserorientierung aufweist, wobei einer (1.12) der Längenabschnitte im Wesentlichen parallel zu einer horizontalen Längsebene des Längsträgers (1) verlaufende Verstärkungsfasern (L2) enthält, während ein weiterer Längenabschnitt (1.11) des Tragelements (1.1), der sich zwischen dem Energieabsorptionselement (1.2) und dem erstgenannten Längenabschnitt (1.12) befindet, sich kreuzende, schräg zur Längsachse des Längsträgers (1) verlaufende Verstärkungsfasern (L1) enthält, und dass das Energieabsorptionselement (1.2) und das Tragelement (1.1) lösbar miteinander verbunden sind.

2. Längsträger nach Anspruch 1, **dadurch gekennzeichnet, dass** das Tragelement (1.1) einen Befestigungsflansch (1.16) oder einen Befestigungsbereich (1.18) zur lösbaren Anbindung des Energieabsorptionselements (1.2) aufweist.

3. Längsträger nach Anspruch 1 oder 2, **dadurch gekennzeichnet, dass** das Energieabsorptionselement (1.2) ein muffenartiges Ende (1.21) mit einem Absatz aufweist, in welches das Tragelement (1.1) eingesteckt ist.

4. Längsträger nach einem der Ansprüche 1 bis 3, **dadurch gekennzeichnet, dass** das Energieabsorptionselement (1.2) eine integrierte Schaumstruktur aufweist.

5. Längsträger nach einem der Ansprüche 1 bis 4, **dadurch gekennzeichnet, dass** das Energieabsorptionselement (1.2) Längenabschnitte unterschiedlicher Wandstärke aufweist.

6. Längsträger nach einem der Ansprüche 1 bis 5, **dadurch gekennzeichnet, dass** das Energieabsorptionselement (1.2) Längenabschnitte unterschiedlicher Querschnittsform aufweist, wobei es in Richtung des Tragelements (1.1) von einem runden Querschnittsprofil in ein im Wesentlichen rechteckiges Querschnittsprofil übergeht.

7. Längsträger nach einem der Ansprüche 1 bis 6, **dadurch gekennzeichnet, dass** das Tragelement (1.1) als durchgängiger Hohlkörper ausgebildet ist.

8. Längsträger nach einem der Ansprüche 1 bis 7, **dadurch gekennzeichnet, dass** das Tragelement (1.1) mit einer Konsole (1.4) zur Anbindung einer Fahrwerks- oder Antriebskomponente versehen ist.

9. Längsträger nach einem der Ansprüche 1 bis 8, **dadurch gekennzeichnet, dass** das Tragelement (1.1) innenseitig angeordnete Verstärkungsrippen (1.17) aufweist.

10. Längsträger nach einem der Ansprüche 1 bis 9, **dadurch gekennzeichnet, dass** die Fügezone (1.3) zur Anbindung des Tragelements (1.1) an mindestens ein benachbartes Karosserieteil U-förmig ausgebildet ist.

11. Längsträger nach Anspruch 10, **dadurch gekennzeichnet, dass** die U-förmige Fügezone (1.3) eine lichte Weite besitzt, die mindestens das 2-fache, vorzugsweise mindestens das 2,5-fache der Querschnittsbreite des Tragelements (1.1) an dessen Übergang zum Energieabsorptionselement (1.2) beträgt.

12. Längsträger nach einem der Ansprüche 1 bis 11, **dadurch gekennzeichnet, dass** das Tragelement (1.1) und/oder das Energieabsorptionselement (1.2) mindestens eine gerade Markerlinie (1.5) aufweisen.

## Claims

1. Longitudinal member (1) for a motor vehicle, with an energy absorption element (1.2) for absorbing impact energy, and a supporting element (1.1) for supporting chassis and/or drive components, wherein the supporting element (1.1) has a joining zone (1.3) for the connection to at least one adjacent body part, and wherein the energy absorption element (1.2) and the supporting element (1.1) are produced from fiber reinforced plastic, **characterized in that** the supporting element (1.1) has length portions (1.11, 1.12) of differing fiber orientation, wherein one (1.12) of the length portions contains reinforcing fibers (L2) running substantially parallel to a horizontal longitudinal plane of the longitudinal member (1), while a further length portion (1.11) of the supporting element (1.1), which length portion is located between the energy absorption element (1.2) and the first-mentioned length portion (1.12) contains intersecting reinforcing fibers (L1) running obliquely with respect to the longitudinal axis of the longitudinal member (1), and **in that** the energy absorption element (1.2) and the supporting element (1.1) are connected releasably to each other.

2. Longitudinal member according to Claim 1, **characterized in that** the supporting element (1.1) has a fastening flange (1.16) or a fastening region (1.18) for the releasable connection of the energy absorption element (1.2).

3. Longitudinal member according to Claim 1 or 2, **characterized in that** the energy absorption element (1.2) has a sleeve-like end (1.21) with a shoulder, into which the supporting element (1.1) is inserted.

4. Longitudinal member according to one of Claims 1 to 3, **characterized in that** the energy absorption element (1.2) has an integrated foam structure.

5. Longitudinal member according to one of Claims 1 to 4, **characterized in that** the energy absorption element (1.2) has length portions of different wall thickness.

6. Longitudinal member according to one of Claims 1 to 5, **characterized in that** the energy absorption element (1.2) has length portions of different cross-sectional shape, wherein said energy absorption element merges from a round cross-sectional profile into a substantially rectangular cross-sectional profile in the direction of the supporting element (1.1).

7. Longitudinal member according to one of Claims 1 to 6, **characterized in that** the supporting element (1.1) is designed as a continuous hollow body.

8. Longitudinal member according to one of Claims 1 to 7, **characterized in that** the supporting element (1.1) is provided with a bracket (1.4) for the connection of a chassis or drive component.

9. Longitudinal member according to one of Claims 1 to 8, **characterized in that** the supporting element (1.1) has reinforcing ribs (1.17) arranged on the inside.

10. Longitudinal member according to one of Claims 1 to 9, **characterized in that** the joining zone (1.3) for the connection of the supporting element (1.1) to at least one adjacent body part is of U-shaped design.

11. Longitudinal member according to Claim 10, **characterized in that** the U-shaped joining zone (1.3) has a clear width which is at least two times, preferably at least 2.5 times the cross-sectional width of the supporting element (1.1) at the transition thereof to the energy absorption element (1.2).

12. Longitudinal member according to one of Claims 1 to 11, **characterized in that** the supporting element (1.1) and/or the energy absorption element (1.2) have/has at least one rectilinear marker line (1.5).

## Revendications

1. Longeron (1) pour un véhicule à moteur, avec un élément d'absorption d'énergie (1.2) pour l'absorption d'une énergie d'impact et un élément de support (1.1) pour supporter des composants de train de roulement et/ou de propulsion, dans lequel l'élément de support (1.1) présente une zone d'assemblage (1.3) pour la jonction à au moins une partie de carrosserie voisine, et dans lequel l'élément d'absorption d'énergie (1.2) et l'élément de support (1.1) sont fabriqués en une matière plastique renforcée par des fibres, **caractérisé en ce que** l'élément de support (1.1) présente des parties longitudinales (1.11, 1.12) avec une orientation des fibres différente, dans lequel une (1.12) des parties longitudinales contient des fibres de renforcement (L2) qui s'étendent essentiellement parallèlement à un plan longitudinal horizontal du longeron (1), tandis qu'une autre partie longitudinale (1.11) de l'élément de support (1.1), qui se trouve entre l'élément d'absorption d'énergie (1.2) et la première partie longitudinale précitée (1.12), contient des fibres de renforcement (L1) qui se croisent et qui s'étendent en oblique par rapport à l'axe longitudinal du longeron (1), et **en ce que** l'élément d'absorption d'énergie (1.2) et l'élément de support (1.1) sont assemblés l'un à l'autre de façon séparable.

2. Longeron selon la revendication 1, **caractérisé en ce que** l'élément de support (1.1) présente une bride de fixation (1.16) ou une zone de fixation (1.18) pour l'assemblage séparable de l'élément d'absorption d'énergie (1.2).

3. Longeron selon la revendication 1 ou 2, **caractérisé en ce que** l'élément d'absorption d'énergie (1.2) présente une extrémité à manchon (1.21) avec un retrait, dans lequel l'élément de support (1.1) est engagé.

4. Longeron selon l'une quelconque des revendications 1 à 3, **caractérisé en ce que** l'élément d'absorption d'énergie (1.2) présente une structure cellulaire intégrée.

5. Longeron selon l'une quelconque des revendications 1 à 4, **caractérisé en ce que** l'élément d'absorption d'énergie (1.2) présente des parties longitudinales d'épaisseur de paroi différente.

6. Longeron selon l'une quelconque des revendications 1 à 5, **caractérisé en ce que** l'élément d'absorption d'énergie (1.2) présente des parties longitudinales ayant une section transversale de forme différente, dans lequel il passe dans la direction de l'élément de support (1.1) d'un profil de section transversale rond à un profil de section transversale essentiellement rectangulaire.

7. Longeron selon l'une quelconque des revendications 1 à 6, **caractérisé en ce que** l'élément de support (1.1) est réalisé sous forme de corps creux continu.

8. Longeron selon l'une quelconque des revendications 1 à 7, **caractérisé en ce que** l'élément de support (1.1) est équipé d'une console (1.4) pour la jonction d'un composant de train de roulement ou de propulsion.

9. Longeron selon l'une quelconque des revendications 1 à 8, **caractérisé en ce que** l'élément de support (1.1) présente des nervures de renforcement (1.17) disposées intérieurement.

10. Longeron selon l'une quelconque des revendications 1 à 9, **caractérisé en ce que** la zone de jonction (1.3) est réalisée en forme de U pour la jonction de l'élément de support (1.1) à au moins une partie de carrosserie voisine.

11. Longeron selon la revendication 10, **caractérisé en ce que** la zone de jonction en forme de U (1.3) possède une largeur libre, qui vaut au moins 2 fois, de préférence au moins 2,5 fois la largeur de section transversale de l'élément de support (1.1) à sa transition vers l'élément d'absorption d'énergie (1.2).

12. Longeron selon l'une quelconque des revendications 1 à 11, **caractérisé en ce que** l'élément de support (1.1) et/ou l'élément d'absorption d'énergie (1.2) présentent au moins une ligne de marquage droite (1.5).
